# EUROPEAN PATENT SPECIFICATION

(11) **EP 2 839 238 B1**
(45) Date of publication and mention of the grant of the patent: **19.07.2017**
(21) Application number: 13717036.1
(22) Date of filing: 17.04.2013
(51) Int. Cl.: G01B 11/245, G01B 11/25

(54) **3D SCANNER USING MERGED PARTIAL IMAGES**
3D-SCANNER MIT FUSIONIERTEN TEILBILDERN
DISPOSITIF DE BALAYAGE 3D UTILISANT DES IMAGES PARTIELLES FUSIONNÉES

(30) Priority: 18.04.2012 DK 201270197
(43) Date of publication of application: 25.02.2015
(73) Proprietor: 3Shape A/S, 1060 Copenhagen (DK)
(72) Inventor: JENSEN, Stefan, Elmsted, DK-2830 Virum (DK); HØJGAARD, Thomas, Allin, DK-3060 Espergærde (DK); ÖJELUND, Henrik, DK-2800 Lyngby (DK); HOLLENBECK, Karl-Josef, DK-2100 Copenhagen Ø (DK)
(74) Representative: Guardian IP Consulting I/S
(86) International application number: PCT/EP2013/058017
(87) International publication number: WO 2013/156530

(56) References cited:
- WO-A1-2006/109308
- WO-A1-2011/044660
- WO-A2-2007/061632
- US-A1- 2004 095 585
- US-A1- 2008 101 688

## Description

### Field of the invention

This invention relates to structured-light 3D scanners based on the principle of triangulation.

### Background of the invention

A method for producing a digital three-dimensional model of a physical target object is to project a known light pattern onto the surface of the object, record the projected pattern with a camera containing a two-dimensional image sensor from a different angle and then compute the shape of the surface from the recorded deformation of the pattern. When the relative positions and the internal parameters of the projector and the camera are known then the three-dimensional shape of the illuminated part of the object can be computed using triangulation. This is known as structured light scanning and described in the prior art.

A particular problem to be solved with structured light scanners is the identification of individual parts of the light pattern in the images recorded by the camera. The more dense the light pattern, and the more lines it contains, the more difficult the problem. Some suggested solutions include coding (e.g., WO2007059780) or phase shifting the light pattern (e.g., US4641972, US7995834). The identification problem is trivial for a single dot of light, and simple for a single line of light. However, a single line of light can yield only one 3D contour. 3D scanners with a single-line light pattern thus typically require at least one axis, typically a linear one, to move the camera and typically also the light source relative to the target object, thus recording multiple contours sequentially.

To obtain a typically high desired resolution, the camera in single-line scanners takes images at short intervals during the motion of the scan head along its axis. To achieve a high scan speed, a high frame rate would be required of the image sensor. At the same time, a high pixel count is required to obtain a high resolution in the direction perpendicular to the camera motion. Only few and expensive sensors are available that offer both a high pixel count and a high frame rate. The problem is exacerbated because a 2D sensor is required to image the line of light distorted in any way, yet still a linear feature in the image; and thus only a small portion of all pixels provide useful data.

EP1170937 presents the idea of combining two overlapping images to increase recording speed in general terms. In the US version (US6437335), the idea is narrowed to an alternation of recording and clocking-out phases for each of the two images. In both versions, the aspect of how to merge overlapping images is not described in any detail, presumably because in the described embodiment, the target object is essentially a 2D object, namely a sheet of paper, and illumination is uniform, hence the problem is trivial. The extension to structured light 3D scanning where the light pattern appears deformed in the images and where there is a possibility of shadowing effects caused by indentations in the target object is however not trivial.

Patent document WO2007/061632 describes a further stereoscopic 3D scanner.

### Summary

Disclosed is a structured light 3D scanner based on the principle of triangulation according to claim 1.

The present invention provides a fast, cheap, structured-light 3D scanner with two cameras with overlapping fields of view. Because the fields of view overlap, the two cameras' image sensors need to be read out only partially, and the concurrently recorded partial images can be merged. The effective scan speed is thus higher for a given - typically relatively cheap - type of 2D sensor. In the extreme case of complete overlap, a speed increase by a factor of two can be achieved. Furthermore, inaccuracies due to laser speckle can be reduced. An extension with additional cameras and using several constellations of those also provides for better visibility when the target object has indentations.

Some two-camera laser line scanners are known in the prior art, for example the 3Shape D700 and the DentalWings iSeries. However in these scanners, independent triangulations are performed for both cameras' images. There is no merging of images prior to triangulation and hence no speed gain. In the prior art scanners with two cameras, the second camera is not even strictly needed to provide the 3D measurement function. The second camera merely increases the chance of visibility inside indentations such as dental impressions.

The scanner of this invention has at least two cameras and at least one structured light source providing a light pattern. The cameras include image sensors for recording 2D images of the reflection of the light pattern from a target object. Preferably, the light source and the cameras are fixed relative to each other and mounted on a scan head. To provide a sweep of the light pattern across the target, the scan head is arranged on some mechanical sweeping axis. Because the position of the scan head must be known in the triangulation calculations, the movement must be well-determined. A linear axis can provide a well-determined movement, especially along with an encoder. Due to the movement of the scan head, there is not only one camera view point in a sweep and hence the scanner according to the invention potentially provides better visibility than structured-light scanners without a sweeping axis.

In many applications, the limiting factor for the scanning speed is the speed of movement of the scan head. Increasing this speed alone will decrease the total scanning time, but at the cost of more sparse coverage on the scanned object. The advantage of using more image sensors is hence that the coverage and hence detail level of the scan resulting from multiple translations of the image sensor unit is preserved even when the sweeping movement speed is increased.

It is possible to have a scan head with only the two cameras, while the light source is fixed in space, but this constellation requires an additional element that records the relative position of light source and cameras while the latter sweep.

The cameras' images need only be partial ones because the cameras' fields of views at least partly overlap. For example, to provide for overlapping fields of views, camera 1 can be arranged such that its field of view is the upper 60% of the scan volume, and camera 2 can be arranged such that its field of view is the lower 60%, resulting in 20% overlap. Dividing the imaging of the scan volume between the two cameras effectively increases the recording rate for a given sensor frame rate relative to the situation of only one camera and thus sensor imaging the entire scan volume. The maximum speed increase is a factor of two, as attained by complete overlap and each camera imaging its half of the joint field of view.

The two cameras' image sensor read-outs are synchronized such as to record the reflections of the light pattern from the target object essentially concurrently. Therefore, an image obtained by merging the two cameras' partial images essentially represents the same relative position of scan head and target object, essentially just as well as a single camera covering the entire field of view would.

One way to read out two cameras concurrently is to read them in parallel, synchronously or asynchronously. It can be advantageous to use a sensor where integration time and readout can occur in parallel.

Preferably, the sensors on the camera allow region-of-interest readout. A region of interest can reduce the number of lines or columns to be read out, or both, increasing effective readout speed as measured in frames per time. To provide input to the triangulation calculations, the partial image sensor read outs, which are equivalent to partial images, are merged.

One way to merge multiple partial images is to use some lines of pixels from one image and some other lines of pixels from the other image.

Another way to merge multiple partial images from overlapping parts of the respective cameras' fields of view is to always take pixel values from the closest sensor.

Another way to merge multiple partial images is to perform a mathematical processing of each camera field of view that transforms each image to a common plane. A well-known method is that of inverse perspective projection, in which knowledge of the scene geometry is used to create an image containing a 2D projection of the observed 3D scene in an arbitrarily defined plane. For this application, the plane chosen is the plane perpendicular to the angular divider between the two vertical planes centered in each camera, and the line of intersection between these vertical planes. Standard tracking algorithms known in the art can then be used on the merged pseudo-image in said plane.

Another way to merge multiple overlapping images conceptually starts from the light source. For practical purposes, the light source can be discretized into a finite number of rays, and each ray again into a finite number of 3D points in the scan volume. Then, given a camera calibration, there exists a function to map any such 3D point in a common coordinate system to 2D image points on every sensor. Each above 3D point is projected to all camera images and the intensity at the corresponding image points is summed. The tracked 3D point for the particular ray is that of the maximum summed intensity. This is then repeated for more all rays within the light pattern, resulting in a 3D profile. With this approach, accuracy can be gained when a ray is visible in multiple images, and speed can be gained when the ray is only visible in a subset of images.

The necessary knowledge of the scanner geometry is obtained by calibration, in which the position and orientation of each camera is provided, as well as possibly additional model parameters, such as those describing lens distortion.

When the light source is a laser, the overlap in the fields of view of the two cameras has the advantageous potential of reducing the effect of speckle as caused by laser light sources. By merging sensor readings for the two cameras using average values for corresponding pixels, any apparent speckle pattern can be at least partly averaged out and thus the triangulation based on the merged image can give less noisy results.

A substantially different viewing angle for the two cameras gives greater flexibility in scanning. A camera with the relatively smaller angle can be used for scanning into indentations, such as dental impressions. The camera with a relatively larger angle can be used for relatively more accurate scanning of areas without indentations, such as the zone around the margin line in dental dies.

A substantially equal viewing angle for the two cameras often has the highest potential for speed increase, because typically the scan volume, when projected onto the two image sensors, has maximum overlap. This is especially so when the scan volume is rotationally symmetric, such as cylindrical, as is the case when the target object can be moved by rotary axis. The scanner may have additional axes such as in rotary axes or swing axes or a second, third, etc linear axes. The additional axes are used for exposing different parts of the surface of the target object to the cameras and light source. For each set of positions of the additional axes, the scan head typically performs one sweep along the sweeping axis, recording contours on its way. Each sweep provides a representation of that part of the target object's surface that is visible for the given set of positions of the additional axes.

Because the scan volume is known at design time, also a strategy of which parts of all camera's images to read out can be found for the design. It is also possible to calibrate the optical and axis geometry parameters of a particular scanner before use. Then, the scan volume can be known even more accurately than for the nominal design, and hence, a strategy for reading out the partial images can also be found or refined before scanning.

In embodiments with two cameras arranged with a substantially different viewing angle, one advantageous implementation is to mount both sensors on a single PCB that contains a flexible zone. A single PCB may be smaller and cheaper than two individual PCB's for each camera.

The scanner may contain additional cameras, such as at least one camera on the other side of the light source, or another pair on the other side of the light source. Also, more than two cameras can be used for image merging. The light pattern is so sparse that the identification problem is simple to solve. Possible light patterns are a single line, or two lines, or at most five lines. If more than one, the lines are preferably designed not to intersect each other within the scan volume. They are also preferably designed to be clearly separated from each other.

The light pattern can be generated by a laser or a LED or a white light source with appropriate optics. For example, commercial laser-based line generator elements are widely available. Ideally for a line generator, the intensity profile is uniform along the line and Gaussian across it. This known characteristic allows for relatively simple software algorithms to detect the line in the images.

The light source can emit visible light or IR or UV light.

The two cameras may have different optical parameters, such as focal length, or they may be nominally identical. The image sensors on the cameras can be CCD or CMOS sensors, or other. The image sensors contain pixels arranged in a two-dimensional configuration. Typically, the sensor has an array of equal-size pixels.

The scanner may have multiple modes of operations and partial image selection strategies, only one of them being the high-speed scanning mode in which partial images are merged. In other modes, full images may be read also for overlapping areas. In another mode, full images are read from pairs of cameras on opposite sides of the light source. In both the latter modes, the consistency of the triangulation can be double checked, or a final result can be computed as an average of corresponding per-camera triangulations, potentially also reducing inaccuracies due to speckle.

One particularly advantageous operation mode may be provided from a constellation where at least two cameras are mounted on one side of the light source and where the at least two cameras are arranged at different viewing angles.

This allows for a scanning mode where a rough overview scan is performed by reading partial images. The different viewing angles allows for both accuracy and visibility. In particular in modes where two or more sweeps are done this may be advantageous.

The camera having the wide viewing angle is then used for the detailed scan.

Moreover, in case very narrow objects are to be scanned, such as dental impressions the camera with the narrower viewing angle may be used instead providing for high visibility.

It has advantageously shown that using a constellation of two cameras, where one is angled 23 degrees to the optical axis of the light exiting the light source or the exit surface of the light source assembly and the other is angled at 18 degrees to said optical axis is highly suitable for a scanning operation as described above.

There may be many more modes with any constellation of cameras and partial image merging strategies.

Multiple modes are preferably adapted to the target object. For example, a rough overview scan of a dental antagonist model may use a mode with maximum image merging, as speed is most important. A more detailed scan of a small dental die may use a mode where the sensors of two outermost cameras on both sides of the light source are read out fully. A more detailed scan of a dental impression may use a mode where the sensors of two innermost cameras on both sides of the light source are read out fully.

3D coordinates are found from the merged 2D images by means of triangulation. Triangulation is well known from the prior art, see e.g., Sonka et al., particularly chapters 9 and 10.

The scan head is typically connected to additional data processing electronics in the scanner. The scanner is then typically connected to a PC for additional data processing and storage. Some data processing may also occur in the scanner's data processing electronics, for example in an FPGA. Some compression may occur in the scanner's data processing electronics, such as to minimize the required bandwidth to the PC.

Every sweep of the scan head for a given constellation of all other axes yields one sub scan, i.e., a 3D representation of that part of the surface area of the target object that is facing the scan head. To obtain more coverage, the target object must be moved with the additional axes into several positions, and another sub scan must be performed for each of those positions. All sub scans can then be combined by mathematical transformation to a common coordinate system. The individual transformations can be assumed known from known axes constellations, or by registration, which is based on matching overlapping areas. Registration can also be used to refine a first result obtained from known axes constellations. The ICP algorithm is often used for registration.

In one aspect there is disclosed a scanning process for scanning a target object comprising a structured light 3D scanner as described above according to claim 11. Advantageously the scanner used in the process has at least two cameras on one side of the light source which are arranged to have substantially different viewing angles. The process then uses the camera having the largest viewing angle during periods of the scanning process where high accuracy is needed.

For background information of many of the topics relevant to this invention, see also Hartley and Zisserman 2003.

### Definitions

**Camera:** A light-recording assembly containing at least some optical element, an image sensor, and some interface electronics for reading out the sensor. A camera is typically mounted on a PCB, but the PCB is not understood to be a part of the camera.
**Field of view of a camera:** the part of the scan volume that is recordable with necessary sharpness by that camera. The field of view in the sense of this invention is not just an angular range or view cone, but also limited to a range of distances away from the camera.
**ICP** (algorithm): Iterative closest point.
**Light pattern:** Assume a planar surface with Lambertian reflectance located at the center of mass of the scan volume, with a normal equal to the optical axis of the light source near its exit surface, and limited by the scan volume. The light pattern is the two-dimensional pattern of illumination appearing on the planar surface when the light source provides light with intensity as typically also provided during scanning. Any illumination below the camera's detection limit at that intensity is not considered part of the pattern.
**Line within a light pattern:** A nominally linear section of illumination within the light pattern. Due to imperfections in the light source in a physical realization of the invention, the line need not be a perfect line in a mathematical sense in a physical realization of the invention. It will have a finite lateral extent and it may not be perfectly straight. For example, commercial laser line generators generate a fan-shaped sheet of light and hence a light pattern with one line.
**PCB:** Printed circuit board.
**Scan volume:** The volume within which a convex target object must be contained when optimal coverage and acceptable accuracy is to be achieved. To achieve optimal coverage, the target object can be moved in any way allowed by the scanner's axes. For a given configuration of (a) cameras with known nominal optical parameters such as focal length, and (b) the sweeping axis carrying the scan head with known motion range, and (c) any other axes carrying the target object with known motion ranges, and (d) the depth range from cameras and light source within which some claimed accuracy can be achieved, the scan volume can be computed a priori.
**Side of the light source:** Denote M1 and M2 as the centers of mass of the image sensors in the two cameras, M as the midpoint point between M1 and M2, and P as the intersection of the optical axis of the light source near its exit surface and that exit surface. Then the two cameras can be said to be located on the same side of the light source if the distance between M1 and M2 is smaller than the distance between M and P. Otherwise, they are said to be on opposite sides.
**Viewing angle of a camera:** The angle between the optical axis of the camera and the optical axis of the light source at its exit surface.
**Visibility of a point on the surface of the target object:** The possibility to illuminate the point with the light source, in conjunction with the possibility to record that illumination with the camera of interest. Thus, there must not be any object or material blocking the light path from the light source to the point on the surface, nor the light path from that point to the camera.

### Brief description of the drawings

The above and/or additional objects, features and advantages of the present invention, will be further elucidated by the following illustrative and nonlimiting detailed description of embodiments of the present invention, with reference to the appended drawings, wherein:
Fig. 1 shows a schematic of particular embodiment of the scanner according to the invention, and
Fig. 2 shows a 3D rendered version of a first embodiment of the invention, and
Fig. 3 shows a 3D rendered version of a second embodiment of the invention.

### Detailed description

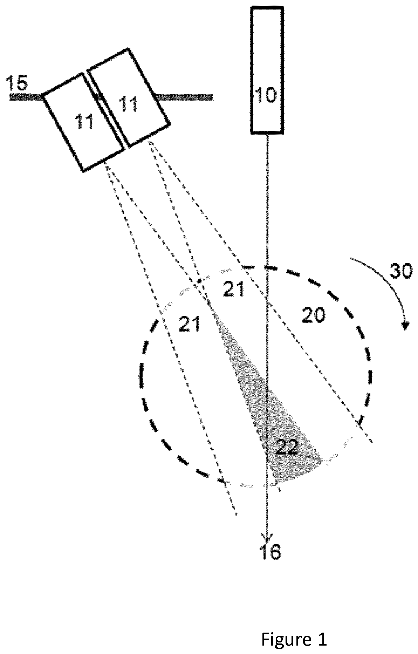

Figure 1 shows a schematic of particular embodiment of the scanner according to the invention, as seen from above. A laser line generator 10 is the light source. It generates a fan of light - appearing as a single ray 16 from above - such that the light pattern is a line perpendicular to the plane of the figure. Two cameras 11 are mounted fixed to each other on one side of the light source. Together they can travel on a linear sweeping axis 15. The circular area 20 within the dashed line indicates the scan volume. The two cameras' fields of view are indicated by the intersection of area 20 and the two triangular areas 21, one for each camera 11. Finally, the overlapping field of view is indicated by the gray area 22. As indicated by the arrow 30, a target object contained in the scan volume can be rotated by a rotary axis (oriented perpendicularly to the plane of the figure and thus not shown). Note that in the sense of this invention, the field of view does not extend to infinity nor includes very small distances from the camera, because sufficiently sharp images can only be captured within a limited range of distances. This limitation is also reflected in the definition of scan volume.

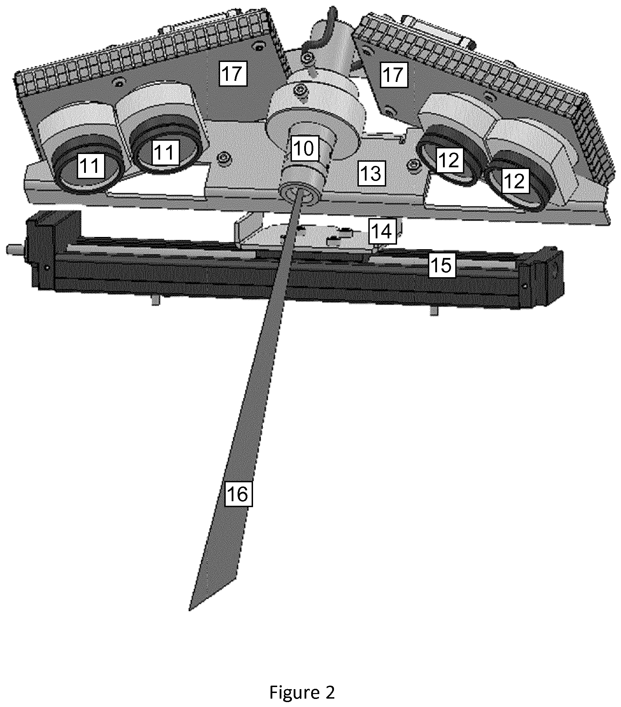

Figure 2 shows a 3D rendered version of an embodiment with one pair of cameras 11 on one side and another pair of cameras 12 on the other side of a line laser light source 10. The light pattern is a line when projected on the target object (not shown), or a fan 16 in 3D. All cameras 11 and 12 and the light source 10 are mounted fixed to each other on a holder 13, which again is mounted on a sled 14 traveling on a linear sweeping axis 15. For EMC compliance, the PCB's on which the cameras are mounted are enclosed in metal cages 17. The sled 14, the holder 13, and all elements thereon, i.e., 11, 12, 10, 17, and the interconnecting un-numbered elements, constitute the scan head.

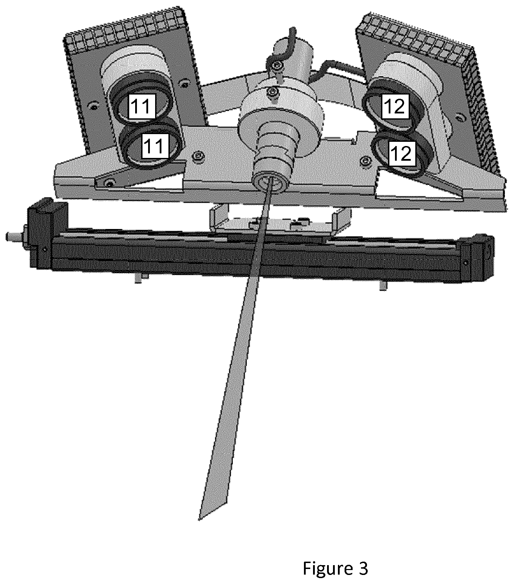

In the embodiment of Figure 2, the two cameras on either side have substantially different viewing angles. Figure 3 shows an embodiment that is identical to the one of Figure 2, except that the two cameras 11 on the one side of the light source have substantially equal viewing angles, and so do the two cameras 12 on the other side of the light source.

### References

*Sonka, M, Hlavac V, and Boyle R*: Image processing, analysis, and machine vision, second ed., 1998, ISBN 0-534, 95393-X.
*Hartley, R, and Zisserman A*: Multiple View Geometry in computer vision, 2003, Cambridge University Press, ISBN 0-521-54051-8.

## Claims

1. A structured light 3D scanner based on the principle of triangulation comprising
- a light source (10) for generating a light pattern (16) - at least two cameras (11) with two-dimensional sensors recording the reflection of the light pattern from a target object
- wherein the cameras are movable along a scanning axis (15) during a scanning process,
- wherein the cameras are arranged with at least partly overlapping fields of view (22), and
- the scanner further comprising a readout unit configured to read out the sensors in the cameras partially and concurrently during at least some period of the scanning process, thus providing partial images, and
- a merging unit configured to merge the partial images prior to performing the triangulation calculations.

2. A scanner according to the above claim where the light pattern contains at most five non-intersecting lines.

3. A scanner according to any of the above claims where the cameras and the light source are mounted in a fixed spatial configuration on a scan head, such that the light source is moved together with the camera along the scanning axis.

4. A scanner according to any of the above claims where the two cameras are mounted on one side of the light source.

5. A scanner according to claim 4 with at least one additional camera (12) on the other side of the light source.

6. A scanner according to claim 4 or 5, where the at least two cameras on one side of the light source are arranged to have substantially the same viewing angle.

7. A scanner according to claim 4 or 5, where the at least two cameras on one side of the light source are arranged to have substantially different viewing angles.

8. A scanner according to the preceding claim where the at least two cameras on one side of the light source are arranged on a single printed circuit board with a flexible section.

9. A scanner according to any of the above claims for scanning dental objects.

10. A scanner according to any of the above claims for scanning dental impressions.

11. A scanning process for scanning a target object comprising a structured light 3D scanner according to any one of the claims 1 - 10, comprising the steps of
- reading the sensors in the cameras out partially and concurrently during at least a period of the scanning process, thus providing partial images,
- merging the partial images prior to performing triangulation calculations, and
- reading the sensor in one camera out completely during another period of the scanning process.

12. A scanning process for scanning a target object according to claim 11, comprising the structured light scanner according to claim 7,
wherein the one camera that is read out completely during the other period of the scanning process is the camera having the largest viewing angle.

## Patentansprüche

1. Strukturlicht-3D-Scanner auf Basis des Prinzips der Triangulation, aufweisend:
- eine Lichtquelle (10) zur Erzeugung eines Lichtmusters (16),
- mindestens zwei Kameras (11) mit zweidimensionalen Sensoren, die die Reflexion des Lichtmusters von einem Zielobjekt aufzeichnen,
- wobei die Kameras während eines Abtastvorgangs entlang einer Abtastachse (15) bewegbar sind,
- wobei die Kameras mit zumindest teilweise überlappenden Sichtfeldern (22) angeordnet sind, und
- wobei der Scanner ferner eine Ausleseeinheit aufweist, die dazu konfiguriert ist, die Sensoren in den Kameras teilweise und gleichzeitig während mindestens einer Periode des Abtastprozesses auszulesen und somit Teilbilder zu liefern, und
- eine Fusionierungseinheit, die dazu konfiguriert ist, die Teilbilder vor der Durchführung der Triangulationsberechnungen zu fusionieren.

2. Scanner nach dem vorhergehenden Anspruch, wobei das Lichtmuster höchstens fünf nichtüberschneidende Linien enthält.

3. Scanner nach einem der vorhergehenden Ansprüche, wobei die Kameras und die Lichtquelle in einer festen räumlichen Konfiguration auf einem Abtastkopf montiert sind, so dass die Lichtquelle zusammen mit der Kamera entlang der Abtastachse bewegt wird.

4. Scanner nach einem der vorhergehenden Ansprüche, wobei die zwei Kameras auf einer Seite der Lichtquelle montiert sind.

5. Scanner nach Anspruch 4 mit mindestens einer zusätzlichen Kamera (12) auf der anderen Seite der Lichtquelle.

6. Scanner nach Anspruch 4 oder 5, wobei die mindestens zwei Kameras auf einer Seite der Lichtquelle so angeordnet sind, dass sie im Wesentlichen den gleichen Betrachtungswinkel aufweisen.

7. Scanner nach Anspruch 4 oder 5, wobei die mindestens zwei Kameras auf einer Seite der Lichtquelle so angeordnet sind, dass sie im Wesentlichen unterschiedliche Blickwinkel aufweisen.

8. Scanner nach dem vorhergehenden Anspruch, wobei die mindestens zwei Kameras auf einer Seite der Lichtquelle auf einer einzigen Leiterplatte mit einem flexiblen Abschnitt angeordnet sind.

9. Scanner nach einem der vorhergehenden Ansprüche zum Scannen von Dentalobjekten.

10. Scanner nach einem der vorhergehenden Ansprüche zum Abtasten von Dentalabdrücken.

11. Abtastverfahren zum Abtasten eines Zielobjekts mit einem Strukturlicht-3D-Scanner nach einem der Ansprüche 1 - 10, mit den Schritten:
- Auslesen der Sensoren in den Kameras teilweise und gleichzeitig während mindestens einer Periode des Abtastprozesses, so dass Teilbilder bereitgestellt werden,
- Fusionieren der Teilbilder vor der Durchführung von Triangulationsberechnungen, und
- vollständiges Auslesen des Sensors in einer Kamera während einer anderen Periode des Scanvorgangs.

12. Abtastverfahren zum Abtasten eines Zielobjekts nach Anspruch 11, aufweisend den Strukturlichtscanner nach Anspruch 7,
wobei die eine Kamera, die während der anderen Periode des Abtastvorgangs vollständig ausgelesen wird, die Kamera mit dem größten Betrachtungswinkel ist.

## Revendications

1. Scanner 3D à lumière structurée basé sur le principe de la triangulation comprenant
- une source lumineuse (10) pour générer un motif lumineux (16)
- au moins deux caméras (11) avec des capteurs bidimensionnels enregistrant la réflexion du motif lumineux à partir d'un objet cible
- dans lequel les caméras sont mobiles le long d'un axe de balayage (15) pendant un procédé de balayage,
- dans lequel les caméras sont disposées avec des champs de vue au moins partiellement en chevauchement (22), et
- le scanner comprenant en outre une unité de lecture configurée pour lire les capteurs dans les caméras partiellement et simultanément pendant au moins une certaine période du procédé de balayage, fournissant ainsi des images partielles, et
- une unité de fusion configurée pour fusionner les images partielles avant d'effectuer des calculs de triangulation.

2. Scanner selon la revendication ci-dessus dans lequel le motif lumineux contient au plus cinq lignes non sécantes.

3. Scanner selon une quelconque des revendications ci-dessus dans lequel les caméras et la source lumineuse sont montées dans une configuration spatiale fixe sur une tête de balayage, de telle sorte que la source lumineuse est déplacée avec la caméra le long de l'axe de balayage.

4. Scanner selon une quelconque des revendications précédentes dans lequel les deux caméras sont montées sur un côté de la source lumineuse.

5. Scanner selon la revendication 4 avec au moins une caméra supplémentaire (12) sur l'autre côté de la source lumineuse.

6. Scanner selon la revendication 4 ou 5, dans lequel les au moins deux caméras sur un côté de la source lumineuse sont agencées pour avoir sensiblement le même angle de vision.

7. Scanner selon la revendication 4 ou 5, dans lequel les au moins deux caméras sur un côté de la source lumineuse sont agencées pour avoir des angles de vision sensiblement différents.

8. Scanner selon la revendication précédente dans lequel les au moins deux caméras sur un côté de la source lumineuse sont agencées sur une seule carte de circuit imprimé avec une section souple.

9. Scanner selon une quelconque des revendications ci-dessus pour balayer des objets dentaires.

10. Scanner selon une quelconque des revendications ci-dessus pour balayer des impressions dentaires.

11. Procédé de balayage pour balayer un objet cible comprenant un scanner 3D à lumière structurée selon une quelconque des revendications 1 - 10, comprenant les étapes consistant à
- lire les capteurs dans les caméras partiellement et simultanément pendant au moins une certaine période du procédé de balayage, fournissant ainsi des images partielles,
- fusionner les images partielles avant d'effectuer des calculs de triangulation, et
- lire le capteur dans une caméra complètement pendant une autre période du procédé de balayage.

12. Procédé de balayage pour balayer un objet cible selon la revendication 11, comprenant le scanner à lumière structurée selon la revendication 7, dans lequel la caméra qui est lue complètement pendant l'autre période du procédé de balayage est la caméra ayant le plus grand angle de vision.
